Europäisches Patentamt

European Patent Office

Office européen des brevets

(19)

(11) Numéro de publication : **0 024 979**
**B1**

# (12) FASCICULE DE BREVET EUROPÉEN

(45) Date de publication du fascicule du brevet :
28.12.83

(21) Numéro de dépôt : 80401197.1

(22) Date de dépôt : 20.08.80

(51) Int. Cl.³ : **C 03 B 35/16, C 03 B 35/18,**
**C 03 B 23/025,**
**C 03 B 27/04, B 65 G 39/04,**
**F 16 C 13/00**

(54) Procédé et appareil pour le support, l'orientation et le transport de feuilles de verre dans une machine de bombage et/ou de trempe.

(30) Priorité : 21.08.79 FR 7921037

(43) Date de publication de la demande :
11.03.81 Bulletin 81/10

(45) Mention de la délivrance du brevet :
28.12.83 Bulletin 83/52

(84) Etats contractants désignés :
BE DE GB IT LU NL SE

(56) Documents cités :
FR-A- 1 167 323
FR-A- 1 262 316
FR-A- 1 365 334
FR-A- 1 476 785
FR-A- 2 312 463
US-A- 3 500 524
US-A- 3 604 087
US-A- 3 848 304
US-A- 3 918 774

(73) Titulaire : **SAINT-GOBAIN VITRAGE**
**Les Miroirs 18, avenue d'Alsace**
**F-92400 Courbevoie (FR)**

(72) Inventeur : **Bonnel, Pierre**
**13, rue Claude Decaen**
**F-75012 Paris (FR)**
Inventeur : **Lemarie, Jean**
**7, Résidence Marceau-Normandie**
**F-92400 Courbevoie (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

Procédé et appareil pour le support, l'orientation et le transport de feuilles de verre dans une machine de bombage et/ou de trempe

L'invention se rapporte au bombage de plaques à l'état plastique, telles que des feuilles de verre chauffées jusqu'à température de ramollissement.

Il est connu par le brevet français FR-A-1 476 785 et ses additions et par le brevet français publié sous le numéro FR-A-2 312 463 de bomber des feuilles de verre en les faisant avancer, alors qu'elles sont dans un état plastique, sur une forme de bombage constituée par une pluralité de tiges cintrées possédant deux extrémités coaxiales. Les tiges peuvent rester couchées dans le plan qui contient leurs extrémités, auquel cas il n'y a aucun bombage, ou peuvent être redressées en dehors de ce plan par pivotement autour de l'axe passant par leurs extrémités, auquel cas on obtient un bombage à un rayon de courbure d'autant plus faible qu'elles sont plus cintrées et plus redressées. Comme décrit dans le FR-A-1 476 785, chaque tige est entourée d'une gaine tubulaire déformable, en principe cannelée, qu'on entraîne en rotation pour faire progresser les feuilles de verre sur la forme de bombage.

Une feuille de verre entraînée en translation sur les tiges cintrées redressées reçoit de chaque point de la gaine tournante une poussée qui est perpendiculaire en ce point à la gaine, ou à la tige cintrée qu'elle entoure, et qui peut se décomposer en une composante longitudinale dirigée suivant l'axe du lit de bombage, laquelle est à l'origine de la translation, et une composante perpendiculaire qui a tendance à déporter la feuille de verre transversalement, vers l'extérieur du lit de bombage supposé convexe quand les tiges cintrées sont inclinées vers l'aval, vers le centre du lit quand les tiges sont inclinées vers l'amont.

Dans la mesure où les feuilles de verre ou volumes ont des formes et des positions sur le lit de bombage telles que les forces transversales tendant à les dévier d'un côté sont équilibrées par des forces transversales tendant à les dévier de l'autre côté, la translation se fait normalement. Mais quand il s'agit de volumes ayant des formes dites « en pointe », trapèze par exemple, les portions de volume soumises à des forces transversales opposées ne sont pas identiques et il en résulte que le volume de verre « dévire », c'est-à-dire tourne sur lui-même au cours de sa translation, jusqu'à une orientation qui correspond approximativement à l'égalité des surfaces situées de part et d'autre du plan de symétrie du dispositif de bombage passant par les sommets des tiges cintrées, et peut en outre dévier.

Ainsi, à cause du dévirage, on aura besoin d'installations de bombage plus larges que strictement nécessaire pour permettre à des volumes de verre avec pointe, plus longs que larges, de se transférer en biais, et par ailleurs, sauf à bomber les feuilles de verre en position arrêtée ou à prévoir des moyens de maintien des feuilles dans la position désirée, telles des glissières latérales adaptées à chaque forme, ou des chaînes munies de taquets de maintien défilant à la même vitesse que le verre, on ne pourra pas toujours choisir l'axe de bombage des volumes de verre.

La présente invention vise à remédier à ces difficultés de « dévirage » donc de positionnement des volumes de verre sur un lit constitué par une pluralité de tiges cintrées entourées de gaines tournantes et propose dans un procédé tel que défini dans la revendication 1 d'associer plusieurs moyens d'entraînement des feuilles de verre indépendants, capables de communiquer à des portions différentes des volumes des impulsions différentes. On peut ainsi engendrer une rotation des volumes de verre, rotation qui pourra compenser le dévirage, ou rotation qu'on provoquera pour choisir un autre axe de bombage.

La présente invention présente un lit de support et de transport de feuilles de verre bombées, tel que défini dans la revendication 2. Ce lit est formé de tiges cintrées inclinables par pivotement autour d'un axe passant par leurs extrémités, entourées de gaines tubulaires, une partie au moins des gaines étant constituée de plusieurs tronçons distincts, entraînés en rotation séparément et éventuellement à des vitesses différentes, voire non entraînés.

Dans une forme d'exécution, les gaines sont constituées de deux tronçons entraînés de préférence axialement sur les rives du dispositif et qui forment deux demi-lits indépendants. Cette version est principalement utilisable au poste de bombage ; elle peut toutefois être employée dans un poste de trempe après bombage, où le verre serait supporté par les mêmes tiges cintrées, mais sa nécessité se fait moins sentir, les feuilles de verre étant en général maintenues en ligne par des contre-tiges cintrées qu'il ne sera en tout état de cause généralement pas nécessaire de diviser elles aussi en tronçons à entraînement séparé et qui ne seront donc plus prises en considération dans la suite de l'exposé.

Dans des variantes utilisables plus spécialement aux postes de trempe, les gaines tubulaires étant toujours constituées de tronçons entraînés individuellement, ou même non entraînés, certains tronçons, en particulier dans les parties voisines des emplacements des buses de soufflage, peuvent être supprimés, laissant ainsi une place soit pour faciliter l'évacuation de l'air soufflé par les buses, soit pour permettre la pose de buses de soufflage supplémentaires, en particulier aux extrémités de la portée utile des tiges cintrées. Ceci permet d'obtenir une trempe différenciée dans certaines zones désirées des vitrages.

Avantageusement, et en particulier au bombage pour atténuer les écarts de température du verre à l'endroit des raccords entre tronçons, ces derniers sont décalés d'une tige à l'autre. De façon également avantageuse, les divers tronçons seront montés de façon amovible sur la transmission et seront solidarisés deux à deux par des joints tournants.

L'invention sera maintenant décrite avec plus de détails en référence aux dessins qui représentent :

Figure 1   un lit de support du verre, formé de tiges cintrées entourées de gaines tubulaires en plusieurs tronçons,

Figure 2   une vue de détail de gaines à quatre tronçons,

Figure 3   abc : trois vues de détail des gaines, au niveau des bagues d'accouplement aux moyens moteurs,

Figure 4   une tige cintrée avec une gaine en deux tronçons,

Figure 5   une vue de détail d'un raccord tournant,

Figure 6   une vue d'une variante à engrenages de la transmission,

Figure 7   une variante de la machine de trempe faisant suite à la machine de bombage sur tiges cintrées.

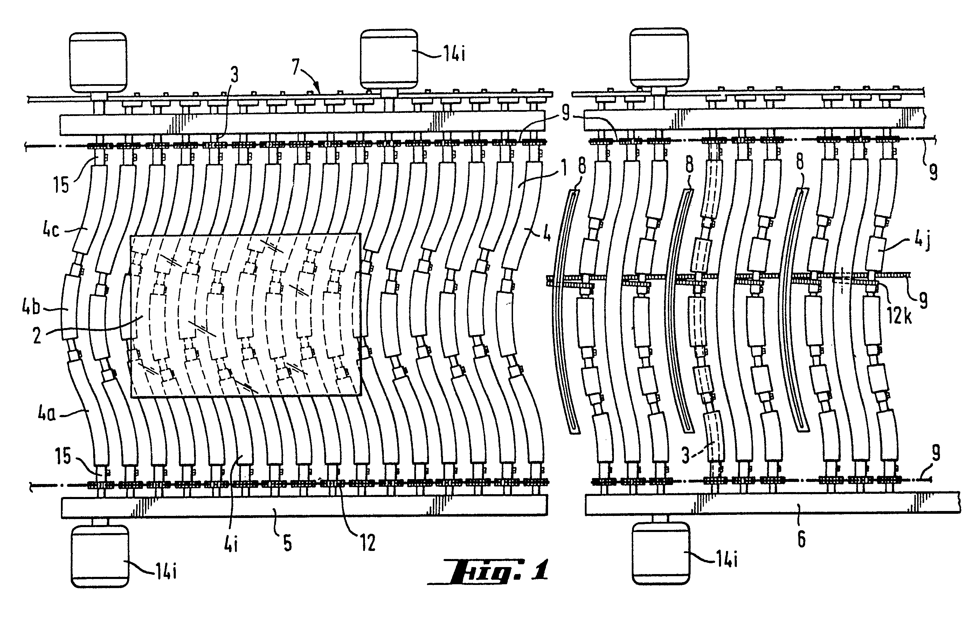

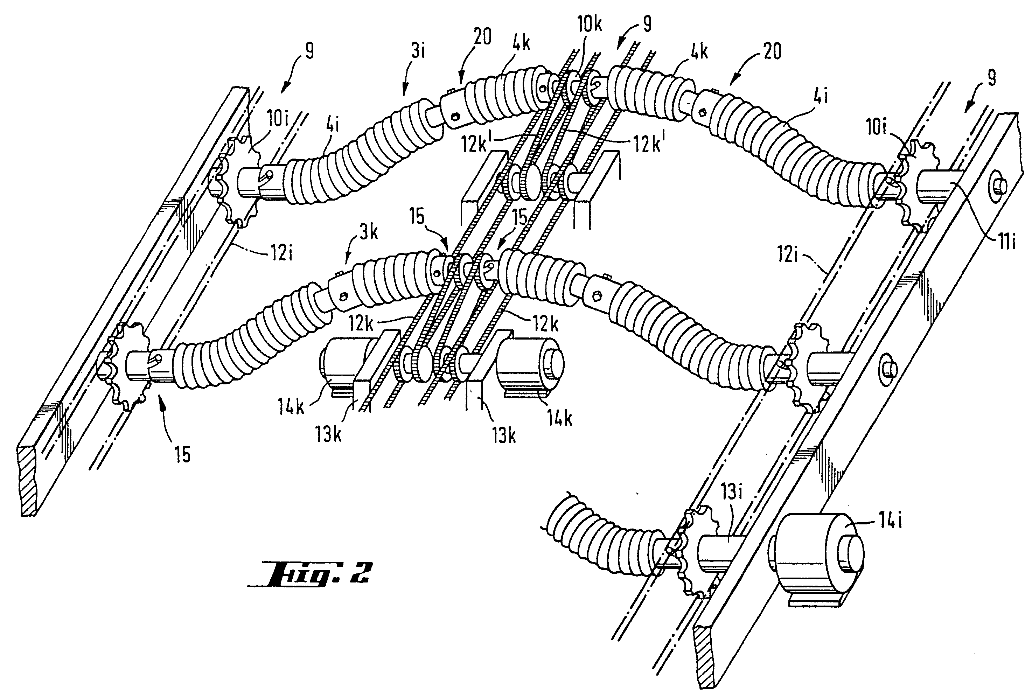

La fig. 1 montre un lit 1 de support de feuilles de verre 2, formé de tiges cintrées telles que 3 entourées de gaines tubulaires 4 en plusieurs tronçons 4a, 4b, 4c, ... 4i ... Ce lit peut appartenir à une machine de bombage 5, et être un lit de conformation destiné à bomber les feuilles de verre, mais il peut aussi appartenir à une machine de trempe 6 faisant suite à une machine de bombage et dans laquelle les moyens de support des feuilles de verre bombées sont aussi des tiges cintrées entourées de gaines tubulaires. Les tiges cintrées ont des inclinaisons et/ou des courbures diverses appropriées pour conférer aux volumes le profil voulu puis, pour épouser le profil obtenu. Leur position est réglée à l'aide d'une commande 7. Dans la mesure où le lit support 1 appartient à une machine de trempe, des buses 8 de soufflage d'air sont intercalées entre les tiges 3 et éventuellement des contre-tiges sont prévues au-dessus des tiges 3 pour maintenir le verre. Le lit 1 peut être un lit à rayon de courbure constant sur toute sa longueur comme décrit dans le brevet français 1 476 785 déjà cité ou être un lit de bombage à courbure progressive comme décrit dans la publication française 2 312 463 également déjà citée. Tous les tronçons de gaines tels que 4i peuvent être entraînés en rotation, mais certains, tels 4j, peuvent tourner fous ; les tronçons entraînés peuvent l'être individuellement ou par groupes ou même tous les tronçons alignés appartenant à différentes tiges peuvent être entraînés par un moyen commun, et tout particulièrement des transmissions à chaînes ou à trains d'engrenages 9 agissant sur un pignon 10 à une extrémité de chaque tronçon. La figure 2 montre un tel système d'entraînement de gaines en quatre tronçons, tout ou partie des tronçons 4i d'une même série de rive appartenant à différentes tiges successives ayant un entraînement commun : dans ce cas une série d'arbres tels que 11i portent les pignons 10i sur lesquels engrène une chaîne 12i entraînée à partir d'un seul arbre moteur 13i, commandé par un moteur 14i à vitesse réglable.

Les tronçons 4k situés en milieu des tiges 3 peuvent également être entraînés et ceci de façon analogue. Ils doivent alors comporter chacun, à leur extrémité motrice, un pignon 10k de moindre diamètre que la gaine elle-même. Ces pignons sont reliés par des transmissions à chaînes 12k capables de suivre l'inclinaison des tiges, telles que celles montrées par la figure, à des arbres moteurs 13k entraînés par des moteurs 14k.

Avantageusement, pour des raisons d'économie lors des échanges de gaines, chaque tronçon de gaine, tel que 4i peut être assemblé sur son arbre ou sur pignon d'entraînement à l'aide d'un joint démontable 15, son extrémité motrice se terminant par exemple, comme le montrent les variantes de la figure, par une bague 16 munie d'un ergot 17. La bague 16 pénètre à l'intérieur d'un collier 18 solidaire du moyeu tournant du pignon 10 et l'ergot 16 vient se bloquer dans une échancrure 19a, b ou c du collier 18.

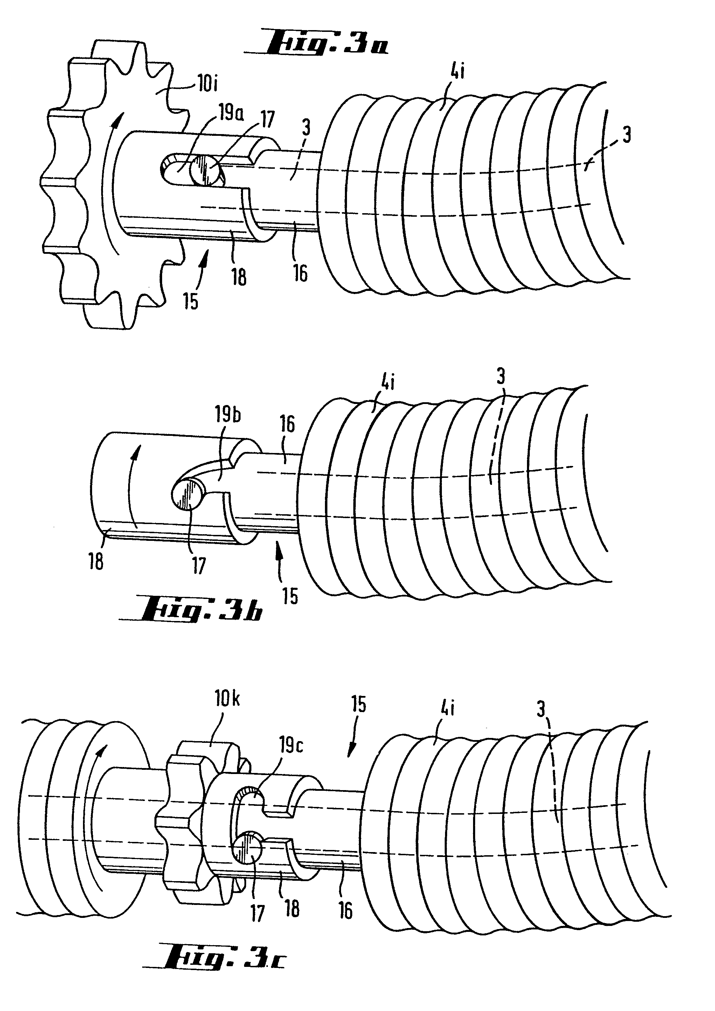

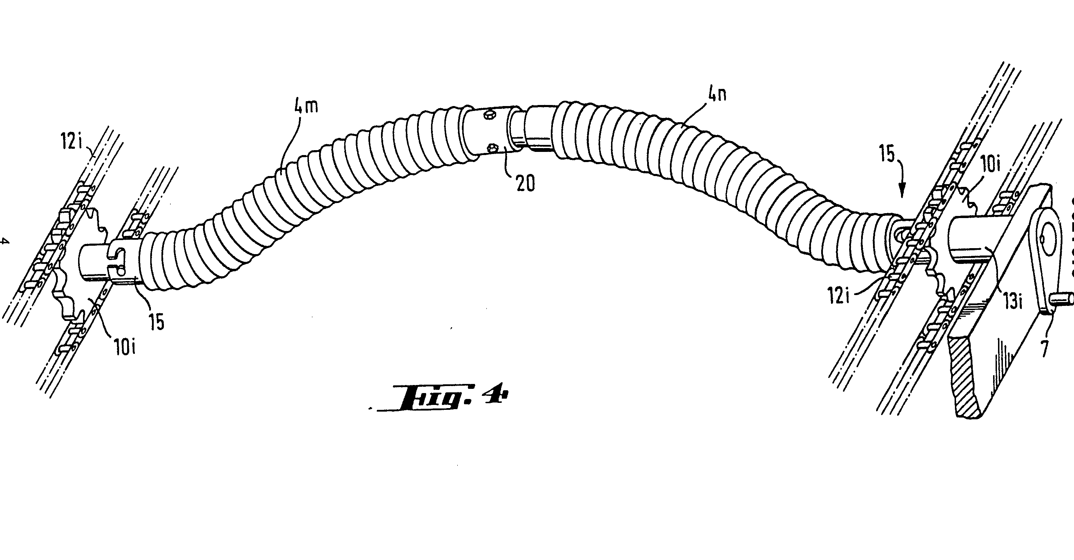

Pour le remplacement des gaines, il faut, au moins sur les rives, que leurs moyens d'entraînement à savoir chaîne 12i et pignons 10i soient démontables. Toutefois, dans certains cas comme celui de la figure 4 qui montre un exemple de réalisation utilisant des gaines 4 en deux tronçons 4m et 4n, plus spécialement adapté aux machines de bombage, où les feuilles de verre à l'état plastique ne sont absolument pas maintenues, il suffira que les moyens d'entraînement placés d'un unique côté de la machine soient démontables ; dans ce cas, de l'autre côté au moins, existera une échancrure, qui sera alors avantageusement, pour permettre d'extraire la gaine correspondante par simple traction, une simple rainure droite 19a selon l'axe de la tige 3, comme montré fig. 3a, ou mieux, incurvée en forme de haricot 19b (fig. 3b) ; la longueur libre totale des deux tronçons 4m et 4n à l'état libre pourra alors être légèrement supérieure, de 5 cm par exemple, à la longueur de tige qu'ils doivent recouvrir. Ces deux tronçons exerceront ainsi à leurs extrémités une légère pression sur chacun des colliers 18 ; ceci sera particulièrement utile pour l'emploi d'une rainure droite.

De préférence, les deux tronçons 4m et 4n, qui se rejoignent dans la région du sommet des tiges, seront rendus solidaires l'un de l'autre grâce à un raccord tournant 20 permettant de les extraire simultanément par simple traction sur le tronçon 4m situé du côté de la transmission amovible. Dans un cas comme celui de la figure 2, les échancrures portées par les joints des pignons 10k seront alors du type à boutonnière 19c montré par la figure 3c, si l'on veut pouvoir effectuer le démontage par traction depuis un seul côté du lit.

Généralement, sur les machines de bombage, la commande d'inclinaison des tiges cintrées 3 se fait d'un seul côté ; ce côté, dit « mécanique », est donc plus encombré que l'autre côté, dit « côté opérateur » parce que c'est là que se tient l'opérateur pour changer les gaines lorsqu'elles sont usées. Si les moyens d'entraînement des gaines sont amovibles d'un côté seulement, ils le seront du côté « opérateur » et c'est du côté « mécanique », au moins, que l'échancrure 19 aura la forme d'une rainure droite ou incurvée en haricot.

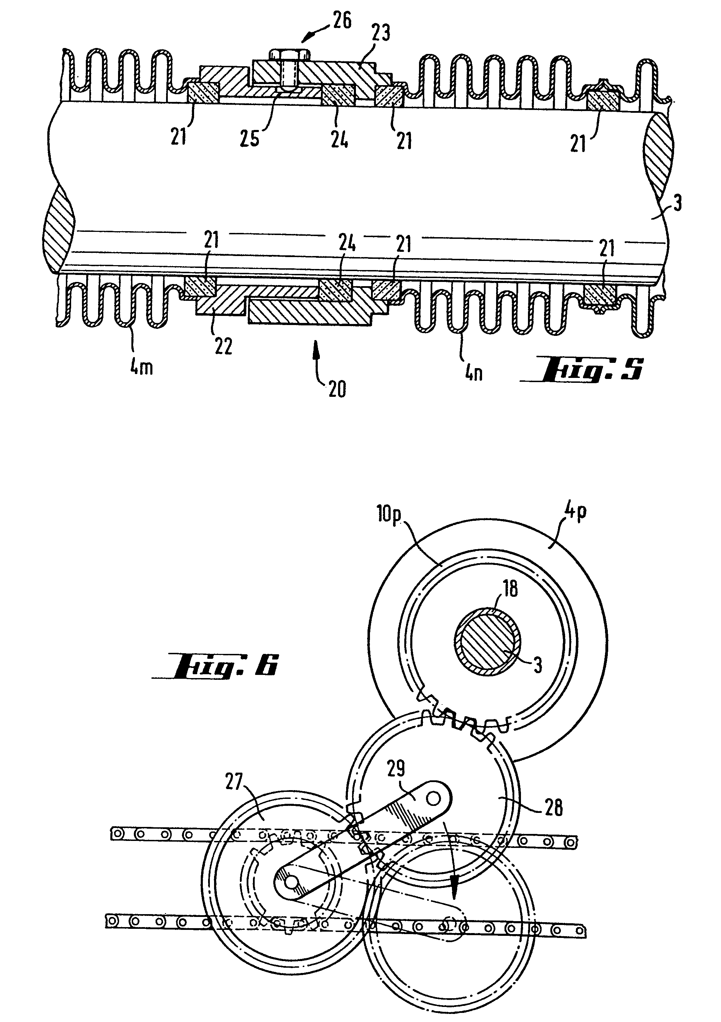

La fig. 5 représente avec plus de détails, en coupe, le raccord tournant 20 entre les deux tronçons de gaine 4m et 4n. Les tronçons 4m et 4n sont, comme montré sur la figure et dit dans les documents antérieurs déjà cités, annelés, de façon à présenter une meilleure flexibilité axiale, pour épouser tout en tournant les courbures de la tige 3 qu'ils entourent mais à conserver une bonne rigidité en torsion pour être entraînés en rotation par leurs extrémités. Comme connu, ces tronçons de gaine sont soutenus de proche en proche par des bagues de glissement 21 en graphite qui reposent elles-mêmes sur les tiges 3. Deux bagues de glissement 21 sont soudées respectivement au bout de chaque tronçon 4m et 4n. Solidaires respectivement de chaque bague de glissement 21 d'extrémité et prenant appui sur elle sont prévus d'un côté en anneau 22, de l'autre une collerette 23 recouvrant au moins partiellement et avec un certain jeu de l'anneau 22. Une bague de glissement en graphite 24 supplémentaire est prévue, contre laquelle glisse en tournant l'extrémité de l'anneau 22 et sur laquelle s'appuie en tournant la collerette 23. La portion d'anneau 22 sous la collerette 23 porte une rainure annulaire 25 et des vis 26 au travers de la collerette 23, s'engageant dans cette rainure, maintiennent la position correcte de l'anneau par rapport à la collerette tout en permettant la rotation de l'un par rapport à l'autre. Ces éléments de raccord tournant, à savoir anneau, collerette, vis sont de dimensions telles qu'ils ne dépassent pas l'épaisseur des tronçons de gaine 4m et 4n.

Comme le reste de la description l'a déjà montré, les raccords tournants ci-dessus décrits peuvent être employés pour raccorder sur une même tige non seulement des demi-gaines 4m et 4n, mais également des tronçons de gaine de n'importe quelle longueur. Avantageusement, pour atténuer le marquage thermique du verre dans les zones des raccords tournants 20, on décalera légèrement les uns par rapport aux autres, les raccords tournants successifs des différentes tiges successives.

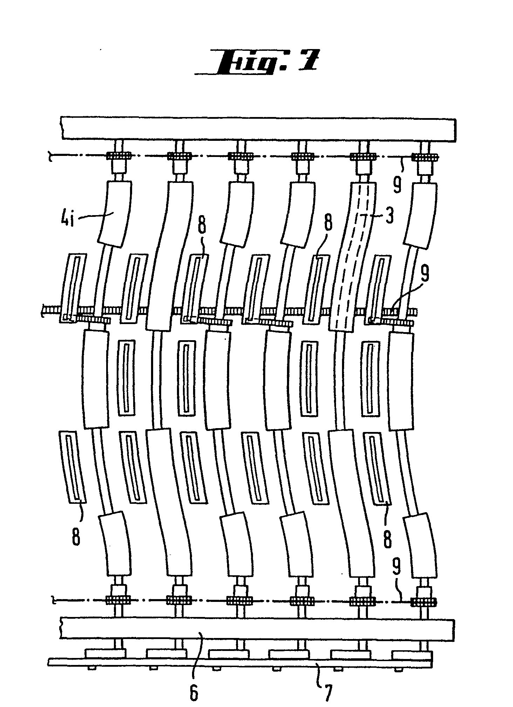

La fig. 6 montre une variante de transmission utilisant un train d'engrenages pour l'entraînement. Cette variante évite d'avoir à démonter la transmission pour permettre le passage des tronçons de gaines lorsqu'on désire les démonter ou les remonter et facilite leur changement.

On trouve sur cette figure un pignon tel que 27 monté sur un arbre moteur et un pignon tel que 10p solidaire d'un tronçon de gaine ou plus précisément solidaire d'un collier 18 auquel est couplée une bague 16 d'extrémité d'un tronçon de gaine 4p. Ces deux pignons sont distants l'un de l'autre et on prévoit un pignon d'accouplement 28 monté à l'une des extrémités d'un bras 29 basculable monté en rotation sur l'arbre moteur. Le pignon intermédiaire 28 est constamment en prise sur le pignon moteur 27 mais, par basculement du bras 29, il peut ou non être couplé au pignon 10p.

La fig. 7 montre un autre exemple d'application des gaines en plusieurs tronçons. Cette fois-ci, il s'agit plus particulièrement d'un poste de trempe 6. On pourra désirer que certaines zones des feuilles de verre soient trempées différemment des autres. Pour cela, grâce au système proposé de gaines tubulaires en plusieurs tronçons entraînés séparément, il sera possible de laisser des portions de tiges non recouvertes par la gaine 4. A ces endroits, on pourra soit laisser libre un passage plus important pour l'air de soufflage des buses, soit ajouter des buses de soufflage supplémentaires 8. Les tronçons de gaines pourront plus spécialement être supprimés sur les extrémités de certaines des tiges 3 de la zone de trempe. Avantageusement, pour résister convenablement à la chaleur, les raccords tournants seront en acier spécial, inoxydable. Ainsi, la qualité Z2 CND 17.13 (AISI 316 L) pourra convenir.

Dans tous les exemples de réalisation décrits précédemment, les tronçons de gaines tubulaires 4i sont, de la même façon que les gaines en une seule pièce de l'art antérieur, recouverts de manchans, par exemple en tresses de fils de verre ou de silice, de la longueur desdits tronçons, et indépendants les uns des autres. Par exemple, une ligature de ces manchons sera effectuée à chaque extrémité des tronçons de gaine 4i sur la bague 16 d'extrémité et sur l'anneau 22 ou la collerette 23 du raccord tournant 20.

Ainsi donc, de préférence, on équipe le poste de bombage 5 avec des gaines 4 en deux tronçons, tous les tronçons étant entraînés en rotation soit individuellement, soit en groupes avec, de chaque côté, des vitesses indépendamment réglables. Lorsqu'une feuille de verre commence à dévirer, ou lorsqu'on veut au contraire la faire dévier pour choisir une direction appropriée de l'axe de bombage, on empêche, on rattrape ou respectivement on crée le dévirage, en faisant tourner les gaines du côté droit à une vitesse différente de celles du côté gauche.

Quand une gaine doit être changée, l'intervention sur les deux tronçons peut se faire à partir d'un unique côté de la machine, de préférence le côté opérateur. Le pignon intermédiaire 28 est désaccouplé par basculement du bras 29, d'un seul côté de la machine ; seule la rotation du tronçon entraîné par ledit pignon est donc interrompue. Il suffit alors de tirer sur le tronçon à portée de la main. Du fait de l'accouplement des deux tronçons 4m et 4 n au niveau du raccord tournant, par les vis 26 et la rainure annulaire 25, le second tronçon reste lié au premier. Etant donné que l'échancrure 19 est soit une rainure droite, soit une rainure incurvée en haricot, l'ergot 17 en sort par simple traction. Pendant ce temps, du côté « mécanique », le pignon d'entraînement du tronçon retiré peut continuer à tourner. La gaine usée étant retirée, on la remplace par une gaine nouvelle, l'ergot est mis en place dans son échancrure aussi bien du côté mécanique que du côté opérateur, et du fait de la légère compression en longueur desdites gaines, l'ergot y reste engagé. Le pignon de liaison 28 du côté opérateur est réaccouplé et la gaine se trouve à nouveau entraînée en rotation.

Au niveau de la trempe, s'il y a des contretiges ou une contreforme, il ne sera généralement pas nécessaire de rattraper le dévirage avec un écart de vitesse de rotation des gaines à droit et à gauche. En l'absence de contretiges ou contreformes, le même montage qu'au bombage pourra être adopté. Eventuellement, pour obtenir une trempe différenciée, les gaines seront en plus de deux tronçons et certains tronçons correspondant à des zones déterminées des feuilles de verre pourront être supprimés. Les tronçons restant pourront être entraînés individuellement ou par groupes à des vitesses séparément réglables. Le même système de pignon intermédiaire basculable pourra également être employé pour entraîner les tronçons situés dans une région centrale des tiges, l'accouplement étant alors en-dessous des tiges, le pignon 27 se trouvant de préférence sur leur axe de rotation.

**Revendications**

1. Procédé pour l'orientation de verre formé tel des feuilles de verre bombées (2) défilant sur des tiges cintrées (3) entourées de gaines tubulaires tournantes (4) qui constituent un lit de support (1) caractérisé en ce que certaines gaines possédant plusieurs tronçons (4a, ..., 4p), et au moins certains des tronçons situés d'un même côté du lit (1) étant munis de moyens moteurs (9) indépendants de ceux des tronçons situés de l'autre côté du lit (1), on communique aux feuilles (2) des forces d'entraînement en translation indépendantes et éventuellement différentes de part et d'autre du plan de symétrie parallèle à la direction de défilement.

2. Lit (1) de support et de transport de feuilles (2) de verre bombées formé de tiges cintrées (3) entourées de gaines tubulaires (4) entraînées en rotation autour desdites tiges cintrées (3), caractérisé en ce que certaines gaines possèdent plusieurs tronçons (4a, b, i, p) au moins certains des tronçons situés d'un même côté du lit (1) étant munis de moyens moteurs (9) indépendants de ceux des tronçons situés de l'autre côté du lit vis-à-vis du plan de symétrie du lit parallèle à la direction de transport.

3. Lit de support et de transport de feuilles de verre selon la revendication 2, caractérisé en ce que les moyens moteurs entraînant les tronçons de gaine en rotation sont des moyens moteurs à vitesse réglable.

4. Lit de support et de transport de feuilles de verre selon l'une des revendications 2 et 3, caractérisé en ce que les tronçons sont munis à l'une de leurs extrémités d'un pignon (10) auquel ils sont raccordés par un joint démontable (15).

5. Lit de support et de transport de feuilles de verre selon la revendication 4, caractérisé en ce que le joint démontable est formé d'une bague (16) porteuse d'un ergot (17) accouplée à un collier (18) possédant une échancrure (19) pour le logement de l'ergot.

6. Lit de support et de transport de feuilles de verre selon la revendication 5, caractérisé en ce que l'échancrure a une forme de rainure ouverte droite (19a) ou incurvée (19b) dans laquelle s'engage l'ergot, les tronçons de gaine étant de préférence pressés longitudinalement contre le collier.

7. Lit de support et de transport de feuilles de verre selon l'une des revendications 2 à 6, caractérisé en ce qu'il existe des tronçons de gaines appartenant à plusieurs des groupes suivants : tronçons (4j) montés en rotation libre sur leur tige, tronçons munis d'un pignon (10i) entraînés individuellement par un moyen moteur ou entraînés en groupes par une transmission à chaînes et/ou à engrenages (12i, 12k) à partir d'un même moyen moteur (14i, 14k).

8. Lit de support et de transport de feuilles de verre selon l'une des revendications 2 à 7, caractérisé en ce que les raccords entre tronçons sont décalés les uns par rapport aux autres, d'une tige à l'autre.

9. Lit de support et de transport de feuilles de verre selon l'une des revendications 2 à 8, caractérisé en ce que différents tronçons montés sur une même tige sont reliés deux à deux par un raccord tournant (20).

10. Lit de support et de transport de feuilles de verre selon l'une des revendications 4 à 9, caractérisé en ce que le pignon (10p) solidaire d'un tronçon de gaine est relié à un pignon (27) entraîné par le moyen moteur par l'intermédiaire d'un pignon accouplement (28) effaçable.

11. Application du lit de support et de transport de feuilles de verre selon les revendications 2 à 10 à la réalisation de machines de bombage du verre, caractérisée en ce que certaines tiges au moins supportent deux tronçons de gaines (4m, 4n) se raccordant sensiblement à leur sommet et entraînables en rotation à des vitesses indépendamment réglables.

12. Application du lit de support et de transport de feuilles de verre selon les revendications 2 à 10 à la réalisation de machines de trempe, caractérisée en ce que certains tronçons de gaines sont supprimés, des buses de soufflage (8, 8) étant mises en place dans les régions avoisinantes.

**Claims**

1. A method of orienting shaped glass such as curved sheets of glass (2) moving on curved rods (3) surrounded by rotating tubular sheaths (4) which form a support bed (1) characterised in that some of the sheaths have a plurality of sections (4a, ..., 4p) and at least some of the sections situated on a same side of the bed (1) are provided with motor means (9) independent of those of the sections situated on the other side of the bed (1), and the sheets (2) are subjected to forces causing displacement in translation which are independent and may be different on respective sides of a plane of symmetry parallel to the direction of movement.

2. A bed (1) for support and transport of curved glass sheets (2) formed of curved rods (3) surrounded by tubular sheaths (4) driven in rotation about said curved rods (3), characterised in that some of the sheaths have a plurality of sections (4a, b, i, p) at least some of the sections situated on a same side of the bed (1) being provided with motor means (9) independent of those of the sections situated on the other side with respect to a plane of symmetry of the bed parallel to the direction of transport.

3. Bed for support and transport of glass sheets according to claim 2, characterised in that the motor means driving the sections of the sheath in rotation are motor means of variable speed.

4. Bed for support and transport of glass sheets according to one of claims 2 and 3, characterised in that the sections are provided at one of their ends with a pinion (10) to which they are connected by a disconnectable joint (15).

5. Bed for support and transport of glass sheets according to claim 4, characterised in that the disconnectable joint is formed of a ring (16) carrying a lug (17) coupled to a collar (18) having a slot (19) for containing the lug.

6. Bed for support and transport of glass sheets according to claim 5, characterised in that the slot has the shape of an open groove which is straight (19a) or curved (19b) in which the lug is engaged, the sections of the sheath preferably being pressed longitudinally against the collar.

7. Bed for support and transport of glass sheets according to one of claims 2 to 6, characterised in that it has sections of sheaths belonging to a plurality of the following groups : sections (4j) mounted for free rotation on their rod and sections provided with a pinion (10i) driven individually by a motor means or driven in groups by a chain and/or gear transmission (12i, 12k) from a common motor means (14i, 14k).

8. Bed for support and transport of glass sheets according to one of claims 2 to 7, characterised in that the connections between sections are staggered one from another from one rod to another.

9. Bed for support and transport of glass sheets according to one of claims 2 to 8, characterised in that different sections mounted on a common rod are connected in pairs by a rotating connection (20).

10. Bed for support and transport of glass sheets according to one of claims 4 to 9, characterised in that the pinion (10p) integral with a section of a sheath is connected to a pinion (27) driven by the motor means through a removable coupling pinion (28).

11. Application of the bed for support and transport of glass sheets according to claims 2 to 10 to machines for curving glass, characterised in that at least some of the rods support two sheath sections (4m, 4n) connected substantially at their summit and drivable in rotation at speeds which are independently adjustable.

12. Application of the bed for support and transport of glass sheets according to claims 2 to 10 to tempering machines, characterised in that some of the sheath sections are omitted and blowing nozzles (8, 8) are located in adjacent positions.

## Ansprüche

1. Verfahren zum Ausrichten von geformtem Glas, wie gebogenen Glasscheiben (2), die über gebogene Stäbe (3) laufen, die von umlaufenden, rohrartigen, ein Transportbett (1) bildenden Hüllen (4) umgeben sind, dadurch gekennzeichnet, daß indem bestimmte Hüllen mehrere Teilstücke (4a, ..., 4p) aufweisen und wenigstens bestimmte auf der gleichen Seite des Bettes liegende Teilstücke mit Motoreinrichtungen (9) versehen sind, die unabhängig von denen der Teilstücke sind, die auf der anderen Seite des Bettes (1) liegen, den Scheiben (2) Antriebskräfte für einen Vorschub vermittelt werden, die unabhängig und gegebenenfalls unterschiedlich auf beiden Seiten der Symmetrieebene parallel zur Laufrichtung sind.

2. Auflage- und Transportbett (1) für gebogene Glasscheiben (2) mit gebogenen Stäben (3), die von schlauchartigen Hüllen (4) umgeben sind, die um die gebogenen Stäbe (3) in Umlauf versetzt sind, dadurch gekennzeichnet, daß bestimmte Stäbe mehrere Teilstücke (4a, b, i, p) aufweisen, von denen wenigstens bestimmte Teilstücke auf der gleichen Seite des Bettes (1) mit Motoreinrichtungen (9) ausgerüstet sind, die unabhängig von denen der Teilstücke sind, die auf der anderen Seite des Bettes gegenüber der Symmetrieebene des Bettes und parallel zur Transportrichtung angeordnet sind.

3. Auflage- und Transportbett für Glasscheiben nach Anspruch 2, dadurch gekennzeichnet, daß die die Hüllen um die eigene Achse drehenden Motoreinrichtungen solche mit regelbarer Geschwindigkeit sind.

4. Auflage- und Transportbett für Glasscheiben nach einem der Ansprüche 2 und 3, dadurch gekennzeichnet, daß die Teilstücke an einem ihrer Enden mit einem Ritzel (10) versehen sind, an das sie über eine lösbare Verbindung (15) angeschlossen sind.

5. Auflage- und Transportbett für Glasscheiben nach Anspruch 4, dadurch gekennzeichnet, daß die lösbare Verbindung aus einem Ring (16) mit Nase (17) besteht, die mit einer Schelle (18) gekoppelt ist, die einen Einschnitt (19) für die Aufnahme der Nase aufweist.

6. Auflage- und Transportbett für Glasscheiben nach Anspruch 5, dadurch gekennzeichnet, daß der Einschnitt die Form eines geraden oder gekrümmten offenen Schlitzes (19a, 19b) aufweist, in den die Nase eingreift, wobei die Hüllenteilstücke vorzugsweise in Längsrichtung gegen die Schelle gedrückt sind.

7. Auflage- und Transportbett für Glasscheiben nach einem der Ansprüche 2-6, dadurch gekennzeichnet, daß Hüllenteilstücke in mehreren Gruppen wie folgt vorgesehen sind : auf ihrer Welle frei drehbare Teilstücke (4j), mit einem Ritzel (10i) versehene Teilstücke, die individuell von einer Motoreinrichtung oder in Gruppen über einen Kettentrieb und/oder über Getriebe (12i, 12k) von einer Motoreinrichtung (14i, 14k) angetrieben sind.

8. Auflage- und Transportbett für Glasscheiben nach einem der Ansprüche 2-7, dadurch gekennzeichnet, daß die Verbindungsstücke zwischen den Teilstücken gegeneinander von einer Welle zur anderen versetzt sind.

9. Auflage- und Transportbett für Glasscheiben nach einem der Ansprüche 2-8, dadurch gekennzeichnet, daß die verschiedenen, auf einer gleichen Welle angebrachten Teilstücke paarweise über eine drehbare Verbindung (20) verbunden sind.

10. Auflage- und Transportbett für Glasplatten nach einem der Ansprüche 4-9, dadurch gekennzeichnet, daß das mit einem Hüllenteilstück fest verbundene Ritzel (10p) an ein Ritzel (27) angeschlossen ist, das von einer Motoreinrichtung über ein koppelbares Ritzel (28) angetrieben ist.

11. Verwendung des Auflage- und Transportbettes für Glasscheiben nach den Ansprüchen 2 bis 10 für Biegevorrichtungen für Glas, dadurch gekennzeichnet, daß verschiedene Wellen wenigstens zwei Hüllen (4m, 4n) tragen, die im wesentlichen an ihrem Scheitel verbunden mit einer Geschwindigkeit in Drehung versetzbar sind, die regelbar und unabhängig voneinander ist.

12. Verwendung des Auflage- und Transportbettes für Glasscheiben nach den Ansprüchen 2-10 für Vorspannmaschinen, dadurch gekennzeichnet, daß verschiedene Hüllenteilstücke entfernt und durch Blasdüsen (8, 8) ersetzt sind.

Fig. 1

0 024 979

Fig. 2

2

## *Fig. 3a*

10i
19a 17
4i
3
3
18
16
15

## *Fig. 3b*

19b
16
4i
3
18
17
15

## *Fig. 3c*

10k
19c
15
4i
3
17 18 16

*Fig. 4*

12i

4

15

10i

4m

20

4n

15

12i

10i

13i

7

0 024 979

Fig. 5

Fig. 6

Fig. 7